# EUROPEAN PATENT APPLICATION

(11) **EP 1 298 113 A2**
(43) Date of publication of application: **02.04.2003**
(21) Application number: 02003543.2
(22) Date of filing: 15.02.2002
(51) Int. Cl.: C04B 40/02, C04B 26/02, C04B 28/02

(54) **Composite stone slabs characterised by special light-reflecting effects**

(30) Priority: 28.09.2001 IT MI012023
(71) Applicant: QUARELLA S.p.A., 37135 Verona (IT)
(72) Inventor: Godi, Alessandro, 37135 Verona (IT); Tassone, Pierpaolo, 37135 Verona (IT)
(74) Representative: Minoja, Fabrizio, Dr.

(57) **Abstract**

Stone agglomerates obtainable by forming mixtures in which fragments of minerals belonging to the mica family in the form of flakes are dispersed, using the vacuum vibro-compressure process.

## Description

This invention relates to stone agglomerates containing inert materials able to produce particular light-reflecting effects.

Stone agglomerates are made by forming them into blocks or slabs with the well-known vacuum vibro-compressure technology, and then hardened by chemical or thermal means. After being cut into tiles or slabs of given sizes, they are supplied to the building industry for use as floor and wall coverings. The technology employed to manufacture stone agglomerates industrially, using quarry waste as raw material and exploiting the binding properties of synthetic resins or cement powders and water which are able to harden to the consistency of stone, irreversibly binding the granules of marble, granite or stone together, has enabled materials alternative to traditional ones like marble, granite or ceramic, which are often preferred for their technical quality and sometimes their appearance, to be offered on the market for the last 30 years.

Traditional materials have always been used in the form of tiles or slabs, sometimes of very large size, for flooring and wall coverings in public and private buildings; this use has been promoted by the decorative properties of the material, together with its technical characteristics, especially its durability. However, although they are certainly attractive, these materials presents colour and technical limitations associated with the increasingly ambitious demand by architects and designers for innovative solutions. To meet this demand, attempts have often been made in the past to embellish the traditional slabs or tiles used in mosaic compositions by inserting coloured, mirror or shiny fragments which constitute a chromatic break in the colouring.

Fragments generally consisting of glass (sometimes made to reflect) or mirror glass have sometimes been added to agglomerates in an attempt to produce shiny or reflecting surfaces, but they do not entirely produce the desired appearance, and can also weaken the structure of the floor or wall covering.

These solutions also suffer from limitations deriving from the difficulty of obtaining the raw material, the high costs involved in waste, the subsequent disposal of residual waste and some notable difficulties in the agglomerate manufacturing process.

The purpose of this invention is therefore to define a new type of decorative fragment which can be used as an additive in a mixture suitable for the manufacture of stone agglomerates with no limitations on type. In particular, the research focused on the attempt to produce materials which, within a given colouring, have a characteristic glitter, namely a sequence of luminous reflections of limited, or sometimes vivid intensity.

The desired effect of light reflection was obtained by adding fragments of minerals belonging to the mica family, suitably reduced to preset dimensions and sorted into suitable particle size, in variable, preset proportions to a mixture suitable for the manufacture of a stone agglomerate product.

The micas belong to a family of complex silicates characterised by the fact that they readily cleave into flakes; their colour ranges between silvery-white and black, and they are very shiny. Mica flakes have long been used in optics because of their birifringent properties: in these minerals, in fact, the ray of light that passes through the crystal is split into two branches; this phenomenon is called double refraction, and the materials concerned are called birefringent.

Micas crystallise in the monoclinic system with a pseudohexagonal habit, usually in lamellar aggregates; their lustre may be vitreous or pearly. They cleave perfectly into very thin, flexible, elastic flakes; they are soft minerals, with different specific gravities, depending on their composition. They consist of aluminium silicates and alkaline metals such as potassium and sodium, with which magnesium and iron in particular, or other elements, are associated with a certain frequency.

Surprisingly, it has been found, and this is the object of the invention, that if flakes of particular types of mica, selected within a suitable particle size range, are added in quantities ranging between 2 and 20% to a mixture suitable for the manufacture of an agglomerate material bound with unsaturated polyester resin or Portland cement, a visual effect not otherwise obtainable will be produced, which can be described as a glitter of particles which have differing intensity, depending on the amount of light that strikes the surface of the tile or slab in which they are inserted, once the product has been polished with conventional techniques.

This effect allows the manufacture of an innovative material of particular interest in terms of appearance, which cannot be obtained, for example, by adding another more or less reflecting material such as fragments of glass or mirror.

The new effect according to the present invention can be explained by examining the optical properties of micaceous materials.

In terms of quality, minerals can generally be classified as transparent or opaque on the basis of their ability to transmit or absorb light when they are split into thin flakes. As a result, the lustre of a mineral depends on the way in which light is absorbed, reflected or refracted by its surface. A distinction is made between metallic, sub-metallic and non-metallic lustre, the latter being further sub-divided into vitreous, adamantine, resinous, pearly and earthy lustre.

The distinction between metallic and non-metallic lustre is not always clear-cut; in some cases there is an intermediate lustre which is called sub-metallic. This characteristic is mainly presented by minerals which are opaque when solid but transparent if split into thin flakes.

Mica flakes are characterised by transparency and vitreous lustre, or more often pearly lustre.

This lustre, typical of the phyllosilicates, is manifested with an iridescence produced by the dispersion of light due to the presence of microcracks in the material.

It has been experimentally observed that this iridescence, caused by the flakes of mica distributed and embedded in the surface of the agglomerate material, produces a pleasing optical phenomenon consisting of superficial, sometimes mobile reflections of the colours of the rainbow, which cannot be obtained in any other way.

Mixtures of agglomerates to which mica flakes are added can be prepared from mineral fillers of carbonate origin (such as marble, limestone or stone in general) or siliceous origin (such as granite or quartz), as mica flakes always present excellent compatibility with the other mineral fillers used, and with any type of binder (organic or inorganic).

Any additives needed for the process or to give the finished product particular properties are equally compatible.

The mixing and forming processes remain the same, as does the subsequent cross-linking or curing process.

A competitive advantage of the process compared with the use of glass or mirror as an alternative to mica flakes (glass and mirror can always be used in combination, but do not produce the same visual effect) is that the Mohs hardness of mica is generally between 2.5 and 4 (and therefore similar to that of marble), thus making the semi-manufactured product easy to cut when it is made in blocks mainly using calcium carbonate fillers.

Another competitive advantage of using mica flakes to produce the required visual effects as an alternative to fragments of mirror or glass (when the latter is made to reflect) is their cheapness. As this is a mineral commonly found in nature (the micas can be considered universal minerals because they are found everywhere, and are very abundant in relation to the other components of the lithosphere), even after the processing required to make the mica flakes suitable for the manufacture of agglomerates in terms of particle size, they cost approximately 80-85% less than reflecting glass and approximately 50% less than mirror scrap.

This latter material is also very hard to obtain in large quantities, because it is scrap from a product destined for entirely different uses; it also involves considerable disposal problems because of its fragility, which means that it is easily pulverised at the crushing stage (it should be borne in mind that mirror scrap contains large amounts of metals such as silver and lead which constitute the backing for the reflecting surface).

Finally, in terms of performance, it should be pointed out that an inert material such as mica flakes is far more suitable as a decorative fragment in a flooring material than fragments of mirror, especially if its particle size is large, because the durability of mirror fragments may be poor when they are subjected to abrasion as a result of being walked on, and they may even constitute a point of fracture in the floor structure in the event of accidental impact with a hard body.

According to the invention, micas of various types can be used in accordance with the invention, such as muscovite, biotite and the like, which have different colours, depending on their composition. Particularly preferred is the use of muscovite, which has the chemical formula K₂Al₄(Si₆Al₂O₂₀)(OH)4, it is silvery-white or colourless, with a hardness of 2.5-4 on the Mohs scale, a specific gravity which generally ranges between 2.2 and 3.1 (preferably 2.8-3.0), and an apparent density of between 600 and 1200 g/dm³ (preferably 800-1000 g/dm³). Muscovite very easily cleaves into flakes.

Mica flakes are used in mixtures with different particle sizes ranging between fine grades, in which 90% of the total is under 300 µm, and coarse grades, in which 90% of the total exceeds 300 µm.

Very good visual effects have also been obtained with even larger particle sizes, in which the mica flakes have an average diameter of approx. 1600 µm, 90% are between 1000 and 4000 µm in diameter, and they have a specific surface of approximately 40 cm²/cm³. In principle, the particle size of mica ranges between approximately 0.1 and 4 mm.

Mica flakes are added to mixtures suitable for stone agglomerate manufacture in proportions which range between 2 and 20% of the total weight of the mixture (preferably 4-10%). They may be added at any mixing step, but they are preferably added together with the other mineral fillers, before adding the binder and before the final addition of the powders used as fillers.

A non limiting example of a mixture consisting of fillers of siliceous origin, suitable for agglomerate manufacture, can be formulated as follows (percentages expressed by weight):
- quartz granulates with particle size between 0.3 and 1.2 mm: 30-40%;
- siliceous sand with particle size between 0.1 and 0.3 mm: 20-30%;
- mica flakes with particle size between 1.0 and 4.0 mm: 4-10%;
- unsaturated polyester resin: 8-10%;
- additives required for the cross-linking process: 0.8-1.2%;
- quartz powder with particle size below 45 µm: 20-30%;
- colouring pastes and pigments: 0.1-1%.

A further non limiting example of a mixture consisting of fillers of calcareous origin, suitable for agglomerate manufacture, can be the following (percentages expressed by weight):
- calcium carbonate granulates (e.g. originating from white Carrara or Lasa marble) with particle size between 0.5 and 1.2 mm: 30-40%;
- calcium carbonate granulates with intermediate particle size between 0.1 and 0.5 mm: 20-30%;
- mica flakes with particle size between 0.3 and 1.0 mm: 4-10%;
- unsaturated polyester resin: 8-10%;
- additives required for the cross-linking process: 0.8-1.2%;
- calcium carbonate powder with particle size below 45 µm: 20-30%;
- colouring pastes and pigments: 0.1-1%.

## Claims

1. Stone agglomerates obtainable by forming mixtures in which fragments of minerals belonging to the mica family in the form of flakes are dispersed, using the vacuum vibro-compressure process.

2. Agglomerates as claimed in claim 1, in which the mica flakes originate from muscovite or biotite.

3. Agglomerates as claimed in claims 1 and 2, in which the mica flakes originate from silvery-white muscovite.

4. Agglomerates as claimed in the preceding claims, in which the mica flakes have particle size between 0.1 and 4.0 mm.

5. Agglomerates as claimed in the preceding claims, in which the mica flakes have density between 2.2 e 3.1.

6. Agglomerates as claimed in the preceding claims, in which the mica flakes are added to the mixture in the proportion of between 2 and 20%.

7. Agglomerates as claimed in any one of the preceding claims, in which the mixture mainly consists of mineral fillers of carbonate or siliceous origin.

8. Agglomerates as claimed in any one of the preceding claims, in which the binder of the mixture consists of organic resins of various chemical natures or hydraulic binders such as cement.

9. Agglomerates as claimed in any one of the preceding claims, in which the semi-manufactured product is made in the form of blocks or slabs.

10. Agglomerates as claimed in any one of the preceding claims, in which the semi-manufactured product is cured at room temperature or at high temperature.
